# EUROPÄISCHE PATENTANMELDUNG

(11) **EP 2 256 267 A1**
(43) Veröffentlichungstag der Anmeldung: **01.12.2010**
(21) Anmeldenummer: 10162617.4
(22) Anmeldetag: 12.05.2010
(51) Int. Cl.: E04F 13/14, E06B 7/10, F24J 2/04

(54) **Anordnung zur energiesparenden Belüftung von Gebäuden mit luftdurchströmbarem Glasfassadenelement**

(30) Priorität: 20.05.2009 DE 202009007218 U
(71) Anmelder: ALTEC Solartechnik AG, 07924 Crispendorf (DE)
(72) Erfinder: Mittig, Holger, 07907 Schleiz (DE)
(74) Vertreter: Meissner, Bolte & Partner

(57) **Zusammenfassung**

Anordnung zur energetisch optimierten Belüftung von Gebäuden, umfassend eine zweischalige, luftdurchströmbare Glasfassadenkonstruktion (4), Heiz und/oder Kühlregister (13,14) zur Frischluftbehandlung, mindestens eine Wärmerückgewinnungseinheit (12), welche im Abluftstrang (16) eingebunden ist, sowie Steuer- und Regelelemente (11). Die dem Gebäude zuzuführende Frischluft wird sowohl über die zweischalige Glasfassadenkonstruktion (4) als auch einen Frischluftturm geleitet, wobei die Frischluft und Abluft jeweils Wärme in der Wärmerückgewinnungseinheit (4) austauschen. Bei fehlender Sonneneinstrahlung ist die Luftdurchströmung in der zweischaligen Glasfassadenkonstruktion (4) zum Zweck der Dämmung reduziert oder gänzlich unterbunden. Dabei wird Frischluft primär über den Frischluftturm bezogen. Bei gegebener Sonneneinstrahlung gelangt erwärmte Frischluft in das Gebäude. Bei hoher gegebener Sonneneinstrahlung wird die zweischalige Fassadenkonstruktion zur indirekten Gebäudekühlung frischluftgespült.

## Beschreibung

Die Erfindung betrifft eine Anordnung zur energetisch optimierten Belüftung von Gebäuden, umfassend eine zweischalige, luftdurchströmbare Glasfassadenkonstruktion, Heiz- und/oder Kühlregister zur Frischluftbehandlung, eine Wärmerückgewinnungseinheit, welche im Abluftstrang eingebunden ist, sowie Steuer- und Regelelemente gemäß Oberbegriff des Anspruchs 1.

Aus dem Gebrauchsmuster DE 20 2006 020 354 U1 ist eine Temperatur-, Wärme- und/oder Kältebarriere insbesondere für eine Vorrichtung zur Klimatisierung von Gebäuden vorbekannt. Diese Barriere weist zumindest eine teilweise transparente Scheibe sowie mindestens eine erste im Wesentlichen flächige Fluidführung auf, wobei zwischen der Scheibe und der flächigen Fluidführung ein Trägermedium für thermische Energien angeordnet ist. Das Trägermedium für thermische Energien ist geeignet, Strahlung, insbesondere Wärmestrahlung zu absorbieren. Das Trägermedium wiederum ist durch Konvektion und/oder fremdbewegt relativ zur Scheibe und der flächigen Fluidführung bewegbar.

Diese vorstehend kurz beschriebene Wärme- und/oder Kältebarriere soll bei bestehenden Gebäuden, insbesondere bei Gebäudefassaden leicht nachgerüstet werden können. Unter der vorbekannten flächigen Fluidführung wird eine Einrichtung verstanden, die es ermöglicht, hinter der Scheibe einen Zwischenraum auszubilden, um ein Fluid durch den Zwischenraum zu führen. Diese Fluidführung ist also innenseitig, typischerweise parallel zur Scheibe angeordnet, so dass sich zwischen Scheibe und der Fluidführung der notwendige Zwischenraum ausbildet. Alternativ können als flächige Fluidführung ein oder mehrere, insbesondere transparente oder transluzente Vorhänge verwendet werden.

Bei einer speziellen Ausgestaltung der DE 20 2006 020 354 U1 ist die flächige Fluidführung zumindest teilweise Licht- und/oder Wärmestrahlung reflektierend ausgebildet. Wiederum ausgestaltend ist die flächige Fluidführung entfern- und/oder zumindest teilweise von der Scheibe weg bewegbar, so dass verschiedene Fluidführungen alternativ genutzt werden können. Im Sommer soll eine Fluidführung verwendet werden, die sichtbares Licht überwiegend reflektiert und so eine Aufheizung des Raumes vermeidet. Im Winter hingegen kann eine solche transparente Führung verwendet werden, die viel Licht in den Raum einlässt und den Energieeintrag direkt in den Raum erhöht.

Zum Stand der Technik sei noch auf die DE 102 57 235 A1, die DE 20 2004 001 204 U1, die DE 198 16 177 C1, die DE 43 01 008 A1, die DE 101 32 327 A1, die DE 101 13 896 A1 und die DE 699 00 504 T2 verwiesen.

Aus dem Vorgenannten ist es daher Aufgabe der Erfindung, eine weiterentwickelte Anordnung zur energetisch optimierten Belüftung von Gebäuden, umfassend eine zweischalige, luftdurchströmbare Glasfassadenkonstruktion anzugeben, die es ermöglicht, einerseits ein unerwünschtes Aufheizen des Gebäudeinneren bei großflächigen Fassadenkonstruktionen zu vermeiden, und die es andererseits gestattet, insbesondere auch in der kälteren Jahreszeit einfallende Sonnenenergie effektiv energetisch auszunutzen, indem auf an sich bekannte Wärmerückgewinnungseinrichtungen zurückgegriffen wird, die neben der an sich bekannten Nutzung der Wärme aus der Abluft in einer energetisch optimierten Weise betrieben werden können.

Die Lösung der Aufgabe der Erfindung erfolgt durch die Anordnung zur energetisch optimierten Belüftung von Gebäuden gemäß der Merkmalskombination nach Anspruch 1, wobei die Unteransprüche mindestens zweckmäßige Ausgestaltungen und Weiterbildungen umfassen.

Es wird demnach von einer Anordnung zur energetisch optimierten Belüftung von Gebäuden, umfassend eine zweischalige, luftdurchströmbare Glasfassadenkonstruktion ausgegangen, wobei die Anordnung Heiz- und/oder Kühlregister zur Frischluftbehandlung, mindestens eine Wärmerückgewinnungseinheit, welche im Abluftstrang eingebunden ist, sowie Steuer- und Regelelemente umfasst.

Erfindungsgemäß wird die dem Gebäude zuzuführende Frischluft sowohl wahlweise über die zweischalige Glasfassadenkonstruktion als auch einen Frischluftturm geleitet, wobei die Frischluft jeweils auf die mindestens eine Wärmerückgewinnungseinheit gelangt, welche energetisch von der Abluft und/oder der durch Sonneneinstrahlung in der Glasfassadenkonstruktion erwärmten Frischluft versorgt ist.

Bei fehlender oder sehr geringer Sonneneinstrahlung wird die Luftdurchströmung in der mindestens zweischaligen Glasfassadenkonstruktion zum Zweck der Dämmung durch Strömungsstagnation reduziert oder gänzlich unterbunden. In diesem Fall wird die Frischluft primär über den Frischluftturm bezogen.

Bei relevanter gegebener Sonneneinstrahlung gelangt die fassadenkonstruktionsbedingt erwärmte Frischluft gegebenenfalls heizregisterunterstützt in das Gebäudeinnere. Bei sehr hoher gegebener Sonneneinstrahlung wird die an den erwärmten Luftstrom abgegebene Wärmeenergie zu Brauchzwecken, z.B. zur Brauchwassererwärmung entzogen und/oder es erfolgt ein Durchspülen der zweischaligen Fassadenkonstruktion zur indirekten Gebäudekühlung, und zwar unter Nutzung von entsprechend angesaugter Frischluft, wobei hierfür die zur Gebäudeaußenseite weisende Seite der Konstruktion aus einem Glas mit hohem Energiedurchlassgrad insbesondere auch im infraroten Bereich und die zum Gebäudeinneren weisende Seite der Konstruktion aus einem Glas mit einem geringen Energiedurchlassgrad, insbesondere im infraroten Bereich besteht.

Ausgestaltend weist die Glasfassadenkonstruktion eine gebäuderaumseitig integrierte oder integrierbare zweite Glasebene auf.

Die Luftdurchströmung der Glasfassadenkonstruktion ist grundsätzlich vertikal, aber auch horizontal möglich, wobei zur Erhöhung der Verweildauer der jeweiligen Luftmenge im Fassadenzwischenraum strömungsein- und/oder -ausgangsseitig Strömungsgeschwindigkeits-reduzierende Mittel vorgesehen sein können.

Weiterhin ausgestaltend besteht die zur Gebäudeinnenseite weisende Glasscheibe aus einem Isolierglas oder einem Isolierverbundglasmaterial.

Die zum Gebäudeinneren weisende Scheibe kann darüber hinaus eine infrarote Strahlung reflektierende Beschichtung, die zum Zwischenraum orientiert ist, aufweisen.

Bei einer weiteren Ausführungsform ist mindestens die zur Gebäudeinnenseite weisende Glasscheibe mit einer elektrochromen oder fotochromen Schicht oder Folie versehen, um einen transluzenten Zustand der Glasfassadenkonstruktion zu bewirken bzw. um eine teilweise Verdunkelung des Gebäudeinneren zu bewirken.

Die Erfindung soll nachstehend anhand eines Anlagenschemas sowie einer Prinzipdarstellung der Doppel-Glasfassadenkonstruktion näher erläutert werden.

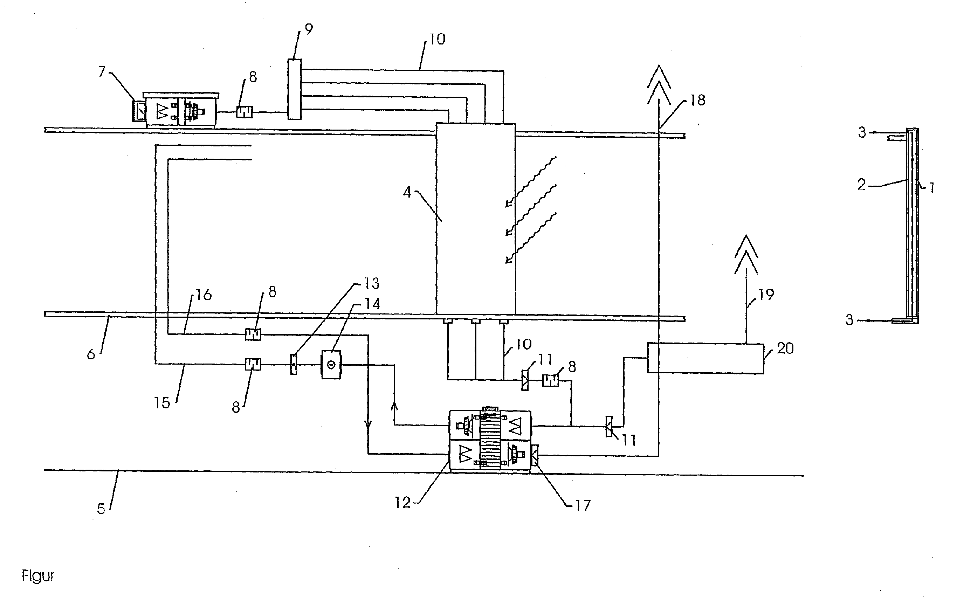

Die in der Figur rechtsseitig dargestellte Glasfassadenkonstruktion geht von einem Verbund von einem außenseitig vorgesehenen Wärmedämmglas 1 aus, das einen sehr hohen Energiedurchlassgrad sowie einen hohen Lichttransmissionsgrad besitzt.

Gebäudeinnenseitig ist ein sogenanntes Sonnenschutzglas 2 mit einem geringeren Energiedurchlassgrad angeordnet.

Über im System integrierte Anschlüsse 3 kann der Raum zwischen den Scheiben 1 und 2 mit einem fluiden Medium, insbesondere Luft durchströmt werden (Pfeildarstellung).

Die Doppel-Fassadenkonstruktion gemäß Schnittdarstellung gemäß Figur, rechter Bildteil, findet sich als Fassade 4 im Anlageschema gemäß der Darstellung, linker Bildteil, wieder.

Die Doppelfassade 4 bildet einen festen Bestandteil der Fassade zwischen Untergeschoss 5 und Erdgeschoss 6 oder kann aber auch über weitere Geschosse führen (nicht gezeigt).

Ein regelbares Außenluftgerät 7 ist in der Lage, Frischluft aus der Umgebung anzusaugen. Diese angesaugte Frischluft wird über einen Schalldämpfer 8 auf einen Verteiler 9 geführt, der mit Verbindungsleitungen 10 in Kontakt steht. Die Verbindungsleitungen 10 dienen der Zuführung der Außenluft zum Zwischenraum der Doppelfassade 4.

Ausgangsseitig ist in der Doppelfassade 4 ein Luftsammelraum vorhanden, der über Leitungen 10 auf eine Absperr- oder Regulierklappe 11 und einen nachgeordneten weiteren Schalldämpfer 8 führt.

Bei entsprechender Sonneneinstrahlung im Fassadenzwischenraum erwärmte Luft gelangt auf ein Wärmerückgewinnungsgerät 12, das ausgangsseitig entsprechend erwärmte Außenluft zur Verfügung stellt. Diese Außenluft kann wenn notwendig auf ein zusätzliches Heizregister 13 geführt werden.

Die erwärmte Zuluft 15 gelangt in das Gebäudeinnere; Abluft 16 hingegen wird über das Wärmerückgewinnungsgerät 12 und eine Absperrklappe 17 als Fortluft 18 in das Freie geleitet.

Über einen Frischluftturm besteht ebenfalls die Möglichkeit, Frischluft 19, z.B. über einen Betonkanal 20 in das Gebäudeinnere einzubringen. Diese Frischluft 19 wird ebenfalls über eine Absperr-Regulierklappe 11 geführt und kann im Wärmerückgewinnungsgerät 12 erwärmt werden. Alternativ kann die Frischluft 19 unmitelbar auf ein Kühlregister 14 gelangen, so dass im Gebäudeinneren gekühlte Zuluft 15 einströmt.

Bei sehr starker Sonneneinstrahlung kann bei entsprechender Konstellation der Absperr-Regulierklappen 11 der Doppelfassaden-Zwischenraum laufend gespült und damit gekühlt werden. Dies bedeutet, dass auf einem solchen Wege die Klimatisierung im Gebäudeinneren optimierbar ist.

Anderserseits kann die über das Außenluftgerät 7 zugeführte Frischluft im Doppelfassaden-Zwischenraum erwärmt werden und so auf das Wärmerückgewinnungsgerät 12 gelangen. Der sich hier zur Umgebung einstellende höhere Temperaturunterschied führt zu einem effektiveren Betreiben einer entsprechenden im Wärmerückgewinnungsgerät 12 vorhandenen Wärmepumpe. Die hier gewonnene Energie kann entweder zu Heizzwecken des Gebäudes, aber auch zur Erwärmung von Brauchwasser oder dergleichen Zwecken Anwendung finden.

### Bezugszeichenliste

- 1: Wärmedämmglas
- 2: Sonnenschlutzglas
- 3: Anschlüsse
- 4: Doppelfassade
- 5: Untergeschoss
- 6: Erdgeschoss
- 7: Außenluftgerät
- 8: Schalldämpfer
- 9: Verteiler
- 10: Verbindungsleitung
- 11: Absperr- oder Regulierklappe
- 12: Wärmerückgewinnungsgerät
- 13: Heizregister
- 14: Kühlregister
- 15: Zuluft
- 16: Abluft
- 17: Absperr- oder Regulierklappe
- 18: Fortluft
- 19: Frischluft
- 20: Betonkanal

## Patentansprüche

1. Anordnung zur energetisch optimierten Belüftung von Gebäuden, umfassend eine zweischalige, luftdurchströmbare Glasfassadenkonstruktion, Heiz- und/oder Kühlregister zur Frischluftbehandlung, mindestens eine Wärmerückgewinnungseinheit, welche im Abluftstrang eingebunden ist, sowie Steuer- und Regelelemente,
**dadurch gekennzeichnet, dass**
die dem Gebäude zuzuführende Frischluft sowohl über die zweischalige Glasfassadenkonstruktion als auch einen Frischluftturm geleitet wird, wobei die Frischluft jeweils auf die Wärmerückgewinnungseinheit gelangt, welche energetisch von der Abluft und der durch Sonneneinstrahlung in der Glasfassadenkonstruktion erwärmten Frischluft versorgt ist,
bei fehlender Sonneneinstrahlung die Luftdurchströmung in der zweischaligen Glasfassadenkonstruktion zum Zweck der Dämmung reduziert oder gänzlich unterbunden ist und in diesem Fall Frischluft primär über den Frischluftturm bezogen wird,
bei gegebener Sonneneinstrahlung die fassadenkonstruktionsbedingt erwärmte Frischluft gegebenenfalls heizregisterunterstützt in das Gebäude gelangt, sowie
bei hoher gegebener Sonneneinstrahlung Wärmenergie dem erwärmten Luftstrom zu Brauchzwecken entzogen und/oder die zweischalige Fassadenkonstruktion zur indirekten Gebäudekühlung frischluftgespült wird,
wobei hierfür die zur Gebäudeaußenseite weisende Seite der Konstruktion aus einem Glas mit hohem Energiedurchlassgrad, insbesondere im infraroten Bereich und die zum Gebäudeinneren weisende Seite der Konstruktion aus einem Glas mit einem geringen Energiedurchlassgrad, insbesondere im infraroten Bereich besteht.

2. Anordnung nach Anspruch 1,
**dadurch gekennzeichnet, dass**
die Glasfassadenkonstruktion eine gebäuderaumseitig integrierte zweite Glasebene aufweist.

3. Anordnung nach Anspruch 1 oder 2,
**dadurch gekennzeichnet, dass**
die Luftdurchströmung der Glasfassadenkonstruktion vertikal oder horizontal möglich ist, wobei zur Erhöhung der Verweildauer der jeweiligen Luftmenge im Fassadenzwischenraum strömungsein- und/oder -ausgangsseitig Strömungsgeschwindigkeit reduzierende Mittel vorgesehen sind.

4. Anordnung nach einem der vorangegangenen Ansprüche,
**dadurch gekennzeichnet, dass**
mindestens die zur Gebäudeinnenseite weisende Glasscheibe aus einem Isolierglas oder Isolierverbundglasmaterial besteht.

5. Anordnung nach einem der vorangegangenen Ansprüche,
**dadurch gekennzeichnet, dass**
die zum Gebäudeinneren weisende Scheibe eine infrarote Strahlung reflektierende Beschichtung aufweist.

6. Anordnung nach einem der vorangegangenen Ansprüche,
**dadurch gekennzeichnet, dass**
mindestens die zur Gebäudeinnenseite weisende Glasscheibe mit einem elektrochromen oder fotochromen Material insbesondere in Form einer Schicht oder einer Folie versehen ist.
